# EUROPEAN PATENT SPECIFICATION

(11) **EP 1 218 802 B1**
(45) Date of publication and mention of the grant of the patent: **03.11.2004**
(21) Application number: 00954687.0
(22) Date of filing: 15.08.2000
(51) Int. Cl.: G05B 19/042

(54) **CAMERA CONTROL IN A PROCESS CONTROL SYSTEM**
KAMERASTEUERUNG IN EINEM PROZESSSTEUERUNGSSYSTEM
COMMANDE DE CAMERA DANS UN SYSTEME DE COMMANDE DE PROCESSUS

(30) Priority: 03.09.1999 FI 991890
(43) Date of publication of application: 03.07.2002
(73) Proprietor: Euroelektro International Oy, 54100 Joutseno (FI)
(72) Inventor: PULKKINEN, Veijo, FIN-54100 Joutseno (FI)
(74) Representative: Savela, Antti-Jussi
(86) International application number: PCT/FI2000/000692
(87) International publication number: WO 2001/018619

(56) References cited:
- EP-A1- 0 774 536
- EP-A2- 1 003 106
- DE-A1- 4 325 325
- US-A- 5 570 085

## Description

### FIELD OF THE INVENTION

The present invention relates to a process control system and a camera monitoring a process..

### BACKGROUND OF THE INVENTION

Programmable logic controllers (PLC) have developed from simple devices in the early 1970's that used integrated circuit technology and were able to carry out simple repeating control tasks, to small and complex systems able to perform nearly all kinds of control applications requiring ability to data processing and advanced computations. PLC's can be integrated to large systems in which various logic units communicate with each other as well as with computers controlling operation of a factory. Industrial applications for PLCs can be found especially in production, petrochemistry, construction industry, and food and beverage industries, where they control temperatures and electro-mechanical devices, such as valves, conveyors etc.

A programmable logic used as a control unit may include dozens or hundreds of I/O ports. Typical devices connected to input ports are pushbuttons, limit switches, proximity switches, and temperature sensors. Solenoids, motors, contactors etc. can be connected to output ports. In brief, the Programable Control Logic (PCL) operates by scanning its inputs and registering their states. The PLC then modifies the states of the outputs to ON or OFF state, in accordance with the control program. This scanning and response process is repeatedly preformed. The entire scanning cycle takes usually 1 to 40 ms, but depends naturally on the length of the program and on how long time it takes to carry out the commands. Once the program has been written, it is easy to utilise: the needed devices are connected to the input and output ports, whereupon a complete process control system has been created.

In many applications, especially in those monitoring the shape, dimensions and location of a product, machine vision is of great advantage. A CCD camera (Charge Coupled Device) is mainly used, on the sensors of which a picture of the target is formed. The analog signal is converted into a digital one and transmitted to an image-processing card where different image-processing operations take place.

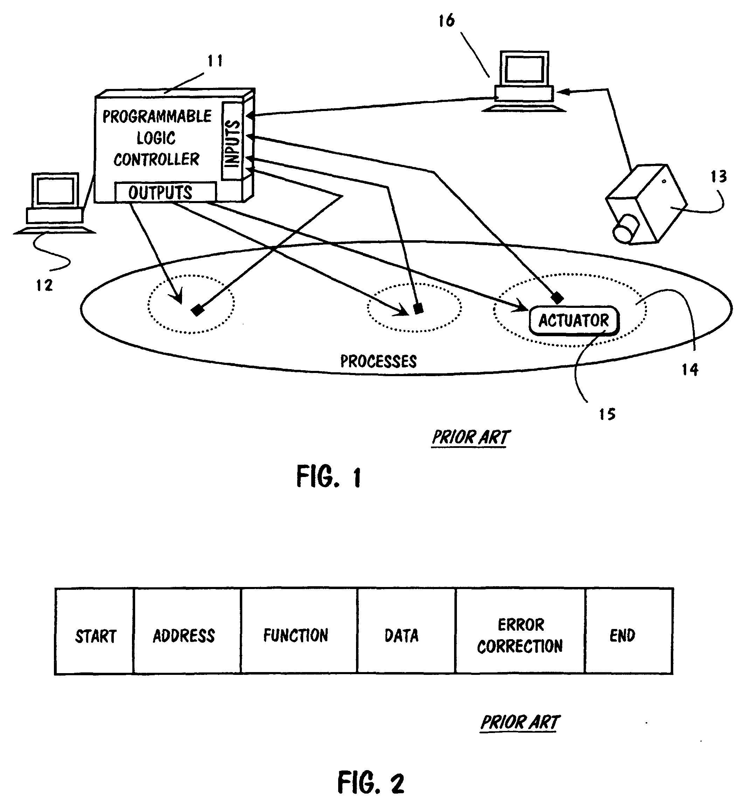

When a camera picture is connected to the input of a programmable logic controller, the process control system illustrated in FIG. **1** is obtained. The processes to be controlled consist of various functions that need to be controlled and adjusted. One of these functions has been marked with dashed line **14** in FIG. **1**. Actuator **15**, e.g. a burner of an oven, energizes the process. A sensor measures a value for the regulating unit, in this case the temperature of the oven. The signal of the sensor is fed to programmable logic **11**. After the scanning period the logic controls to actuator **15** in accordance with the control program.

CCD camera **13** is used as a sensor and it has been connected to computer **16** via a video bus. The computer contains an image-processing card and it may be a common multipurpose PC. The computer processes the image according to an image processing program and gives the results to programmable logic **11** via a connection bus. In this example, the CCD camera would monitor the shape and color of the products coming out of the oven.

A system similar to FIG. **1** has been presented in the patent application DE-4325325. There the logic is programmed with a programming device consisting of a keyboard, a monitor and a CPU. The video input of the programming device is cabled to the video output of a remote process control camera. The video picture from the camera can be seen on the display and the logic can then be programmed as desired. In this case the video camera serves only as the user's visual aid.

A so-called smart camera can be used as well. It contains circuits and software needed for image-processing. An image can then be processed in the camera itself, and no computer is needed. Programming of a smart camera depends on the manufacturer, which means that a programmer specialized in each type of camera is needed. In many cases the camera is supplied to the user custom programmed according to user specifications.

Programmable logic devices are able to intercommunicate and exchange messages via a field bus. The most common field bus protocols are Modbus and Profibus, the latter having been specified in European Committee for Electrotechnical Standardization (SENELEC) standard EN 50170. The protocols define the message structure very precisely, and the devices are classified to master and slave devices. Modbus uses RS 232C and Profibus uses mainly RS 485 transfer technology.

In order to give a clarifying example the Modbus protocol will be explained here more in detail. The protocol defines how a device knows its own device address, recognizes a message addressed to it, knows what functions it has to do and is able to distinguish data from a message. If the data transfer system is other than the Modbus, e.g. the Ethernet or the TCP/IP network, the messages are embedded into the frames or packets of the network in question. Communication always takes place using the master-slave principle, i.e. only the master device is able to start the transactions whereas the slave device responds by sending the requested data or by performing the functions asked by the master. Usually the master is a programmable logic and the slave device a peripheral, such as an I/O device, a valve, a driver or a measuring apparatus.

In FIG. **2** a message structure in accordance with the Modbus protocol is presented. The message starts with a "Start" sign, i.e. a semicolon, and ends to an "End" sign, which is a CRLF (Carriage Return-Line) sign. After the start sign there is the individual address of the target device. When replying to the message the target device relocates its own address in this field, on the basis of which the master device knows where the reply had come from.

The code to be given in the "function" field, which comes next, may have values from 1 to 255 (given in decimal numbers). It tells what kind of a function the slave device has to perform. When giving an answer the target device uses this field in order to indicate either that the answer was correct or that an error had occurred during the performance of the task.

In the next field, the" data" field, the master device gives information needed by the slave device for performing the given task. When replying the slave device relocates the data resulted from the performed task in this field.

The error checking field contains the error checking of the message contents, either a LRC or a CRC error check sum.

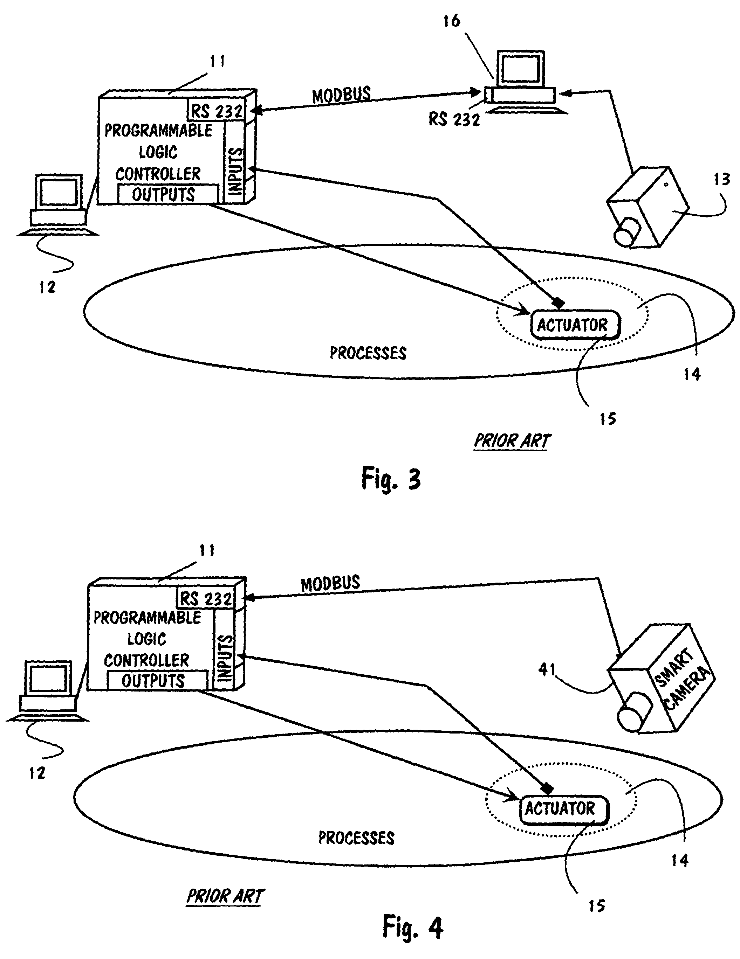

FIG. **3** presents a case where a camera as a peripheral is connected to the programmable logic using a known field bus. The logic in programmable logic controller **11** and computer **16** have RS 232 connections. Unlike in FIG. **1** there is a bi-directional connection between the computer and the programmable logic, in this case the Modbus. This means that the logic can ask the computer when it has finished its computations. The computer 16 carries out in advance the image-processing programmed into it, and the logic cannot interfere in any way. It only receives the results.

A system like this is presented in the patent US-5882402. The process consists of drawing optical fiber out of a molten crystal. The image-processing unit has an image processor and it is attached to a camera that monitors the fiber. The image processing unit is further connected to the programmable logic by means of a duplex data transfer channel. The logic is programmed via the operator's computer. The image-processing, i.e. the camera, is programmed via a computer connected to the image-processing unit. One possible procedure is to combine the computer connected to the image-processing unit with the operator computer. According to the specification the merged computer acts as a user interface in order to program the programmable logic. Here we can, at least in theory, program both the logic and the image-processing of the camera using the same user interface. However, the programs of each device are different to the extent that the process operator must have a deep knowledge of the camera software.

FIG **4** presents a case in which the camera and the computer have been replaced with so-called smart camera **41**. The field bus is directly connected to the interface of the camera. In this case, too, the camera program processes the image in advance according to the program and the logic cannot interfere in any way. It only receives the results.

The problem with these two cases, where the camera is connected to the programmable logic via a field bus, is that the smart camera or the computer must be made able to perform the tasks the logic asks for and provide the task results back to the logic. The camera is programmed to give only the requested results, and if any other information is required, the camera has to be reprogrammed. The programs for the computer and the smart camera differ from one software vendor to another, which means that they require special know-how. The manufacturer very often programs the device according to the customer's instructions prior to delivery. If the customer wishes to have any modifications in the controlled process, or if he wishes that the camera gives other values than before, changes in the camera software must be made. Then the supplier is requested to send a specialist programmer to do the modifications. On the other hand, the programming of a PLC requires expertise and know-how that the process supervisor must naturally have. When the process supervisor wants the camera to provide new information as a response to a new command, prolonged cooperation is often needed between the process supervisor, who knows to PCL program, and the programmer specialized in programming cameras. This is both expensive and time-consuming, as the reprogramming costs are high and two persons are needed to do the work: one takes care of the camera, the other of the programmable logic

There is an attempt to overcome this problem by making it easier to (re)program a smart camera, namely by using different types of graphical interfaces. There are programs of Windows® type suitable for various machine vision applications. These programs, e.g. AElnspect and FlexAuto for Windows, made by Automation Engineering Inc. USA, work in common multipurpose PCs. Despite these programs alleged ease off use, they require a high level of expertise that a process supervisor seldom has. Additionally, changing the camera programming requires physically accessing the cameral, sometime an inconvenient or dangerous undertaking.

### SUMMARY OF THE INVENTION

An objective of the present invention is to devise a camera control connected to a process control unit, especially to the programmable logic controller, so that the control does not have the drawbacks of the prior art systems. The objective is a system in which the operator of the control unit can easily program the computer connected to the camera or the smart camera so that the computer of the camera can perform tasks defined in a query message sent via a data transfer channel as well as relocate the task results in the reply message.

The invention is based on the insight that the computer linked with a smart camera or an ordinary camera can be provided with an adaptation program. This program is able to compile the tasks given by the process control unit to a language understood by the camera software. Correspondingly, it can send the task results to the control unit. The amount of parameters needed for the tasks and their performance is only limited by the ability of the camera software to carry out the tasks.

Another insight is to transmit the command tasks from the process control unit to the smart camera or the computer, and, correspondingly, the task results to the process control unit in accordance wit a known transmission protocol. Hence, the adaptation program acts as an compiler between the protocol used and the specific software of the camera. As a data transfer link it is favorable to choose a prior art field bus using the Modbus or the Profibus protocol.

Before the user of the programmable logic brings the system into use he makes a covering list of all image-processing tasks he wants the camera software to perform. Each task gets a code, which is a number, for example. Additionally, each task is provided with an adequate number of parameters needed to perform the task. After that an adaptation program is created. The adaptation program is constructed to extract task codes and parameters from the messages transferred by data link using the selected protocol. The task codes and parameters are compiled into a set of tasks that the specific camera software is capable of performing. The adaptation program gives the task codes, optionally with its parameters, to the camera software. Then the software performs the task according to the task code and returns the task results to the adaptation program in a form that it is able to understand. After this the adaptation program forms a reply message according to the used data transfer protocol, relocates the results in the reply message and transmits the message via the transmission channel. All tasks provided by the adaptation program to the image-processing program are understood by the latter.

Besides the adaptation program another program is created in the process control unit, e.g. in the programmable logic. This program may include any task directed to the image processing/camera program, provided such tasks are understood by the adaptation program. The control unit program may now be modified whenever such modifications are needed, as long as such modifications include codes understood by the adaptation program.New tasks can be included in it or the parameters of existing tasks can be changed without any need to modify the camera software or the adaptation program.

If desired, the image signal from the camera can be fed, using a separate connection, to a monitor in the process supervisor's facilities. Then the supervisor sees the picture of the target and is able to give various tasks to the camera in a very flexible manner. It is easiest to give the tasks via the same user interface with which the process control unit is normally programmed.

### BRIEF DESCRIPTION OF THE DRAWINGS

The invention is described more in detail with reference to the accompanied schematic drawings in which
- Fig. 1: shows a known process control system in which the camera is used as a sensor;
- Fig. 2: shows message fields according to the Modbus protocol;
- Fig. 3: shows a known system in which a camera linked to the computer is connected to a programmable logic via a field bus;
- Fig. 4: shows a known system using a smart camera;
- Fig. 5: illustrates in broad outline how a adaptation program is developed;
- Fig. 6: shows schematically functions of a proceeding logic program;
- Fig. 7: illustrates an embodiment of the system based on the invention;
- Fig. 8: shows a picture to be examined;
- Fig. 9: is a structure of the query message;
- Fig. 10: is a structure of the reply message;
- Fig. 11: shows another embodiment based on the invention, and
- Fig. 12: is a partial enlargement of Fig. 11

### DETAILED DESCRIPTION OF THE INVENTION

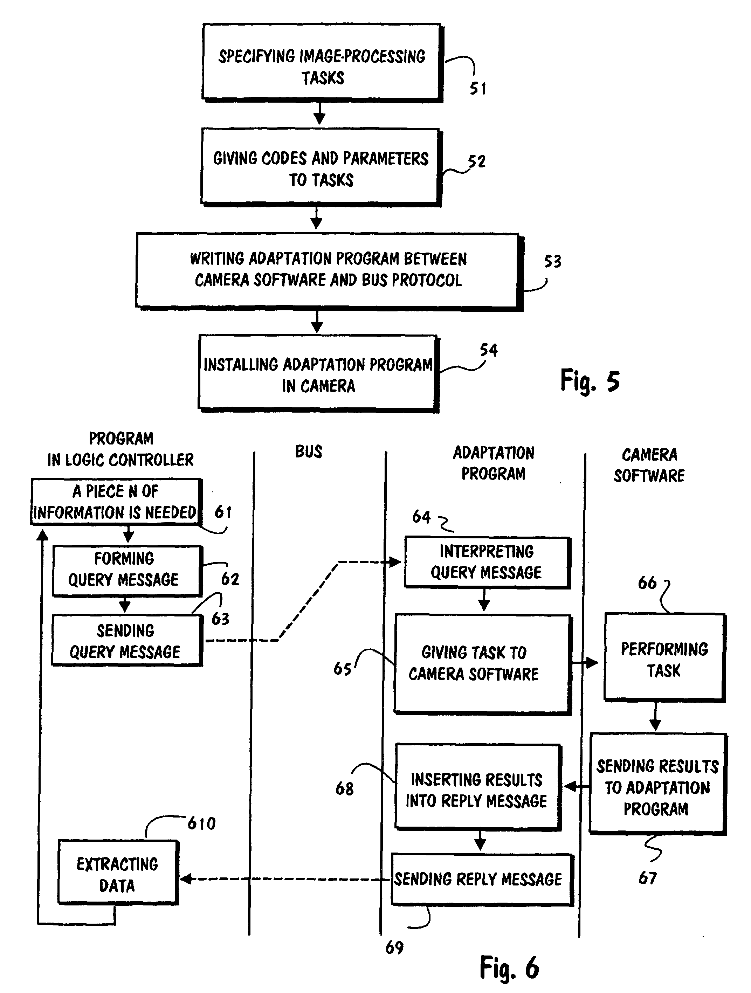

Fig. **5** illustrates how a system based on the invention is brought into use. When a camera is connected to a programmable logic or a factory system one has to define what kind of information the image-processing software of the camera should produce, step **51**. The desired information depends naturally on the target of the camera. If the target is for instance an object with an additional part, that area of the picture is viewed where the additional part is supposed to be. In this area the image-processing program examines whether the part has been attached or if it is missing. Hence, the number and nature of the tasks to be performed depends on each project.

When the tasks have been determined, an individual code, a task number and the needed parameters are attached to each task, step **52**. For instance, task number 1 could signify that the average shade of gray of a picture should be calculated. The parameter associated with this task would give the pixel density used in calculation; the parameter value would e.g. mean that every fourth pixel ought to be counted.

When all the tasks have been determined, equipped with a code and parameters, an adaptation program can be written. This program understands what the image-processing program has to do, step **53**, on the basis of the figures in the data field that have been sent in a message according to the bus protocol. The adaptation program must know how to compile the tasks defined above to a language understood by the camera software in such a manner that the software is able to carry out the tasks. The adaptation program also has to be able to receive the results from the camera program and to relocate them correctly in a reply message according to the data transfer protocol, as well as to pass the message to a data transfer channel.

When the adaptation program has been created it is installed in the camera, step **54**. After the program has been programmed in the process control unit that uses the above mentioned task codes and parameters in the messages that it sends to the camera, the system is ready for use. The process operator now easily determines what the camera software does by changing the values of the parameters at any time.

From here on, we shall use the Modbus protocol and data link to provide an example of the process control by programmable logic. In Fig. **6** the function of the system is illustrated during the process. Let us suppose that the software of the logic has proceeded to a point where it needs information from the camera, step **61**. Then the software makes a query message according to the bus protocol used, step **62**. It puts in this message the task code and parameters, the realization of which provides the information needed by the logic program. When the query is ready, it is sent to the bus, step **63**.

The adaptation program recognizes that the query is addressed to it from the device address, and opens it, step **64**. The adaptation program understands from the task code of the message what the camera program has to do. The adaptation program then transfers the task and the related parameters to the camera program, step **65**. The camera program carries out the given image-processing task, step **66**, and returns the results to the adaptation program, step **67.** The adaptation program then forms a reply according to the bus protocol and relocates the results from the camera program into it, step **68**.

During the previous steps the logic program has regularly polled the devices connected to the bus. When the camera is polled, it sends a reply, step **69**. The logic receives the message from the bus and recognizes the task results in the data part, step 610, and supplies this result to point **61** of the logic program that requested the information.

In the logic program there may be several points that need information about the picture taken by the camera. The logic program may also ask the camera program more precise questions on the basis of received information. The program in the logic control unit utilizes the reply from the camera unit in a manner required by the program. Depending on the application the program may ask the camera one or more additional questions before the process is influenced or any decision made. A conveyor could serve as an example. It may transport objects of five different sizes. The system based of the invention should decide whether the each of the objects is acceptable or should be rejected. When the camera has viewed the object and its picture has been transmitted to the image processing program, the logic sends, e.g. triggered by a photocell, the first query to the camera asking about the dimensions of the object. The camera program calculates the dimensions from the picture and the application program sends the information to the logic. On the basis of the information the logic program concludes which one of the five objects is concerned. After this the logic program branches out to the program branch concerning this very object and may ask the camera many additional questions. As a response to the queries the camera software calculates the required data from the saved picture and sends them as replies to the programmable logic queries. In this way several picture details can be checked and finally the conclusion can be made whether the object should be accepted or not. If the object is to be rejected the programmable logic outputs the signal for removing the object from the belt.

Queries can either be sent periodically using the scanning principle or they are sent only if a certain triggering condition has been asserted. There may be many different queries. The logic program decides which message is sent in each case. In different applications the query type to be sent may depend on the reply to the previous query.

When the operator of a process control system wants to make changes in the programmable logic he makes this by means of the programming device, as known. If the program modifications to be made require that the image-processing program of the camera perform other tasks and give other results than those already defined in previous queries, the maintainer sets a new query in the logic program, or more precisely a task code for a query with the related parameters. If the query code is already familiar to the adaptation program, there is no need for modifying the adaptation program in the camera.

It is essential to notice that the same person who programs the logic may easily now also "program " the camera. There is no need for a specialist in camera programming to make program modifications in order to obtain new type of results.

### PREFERRED EMBODIMENT OF THE INVENTION

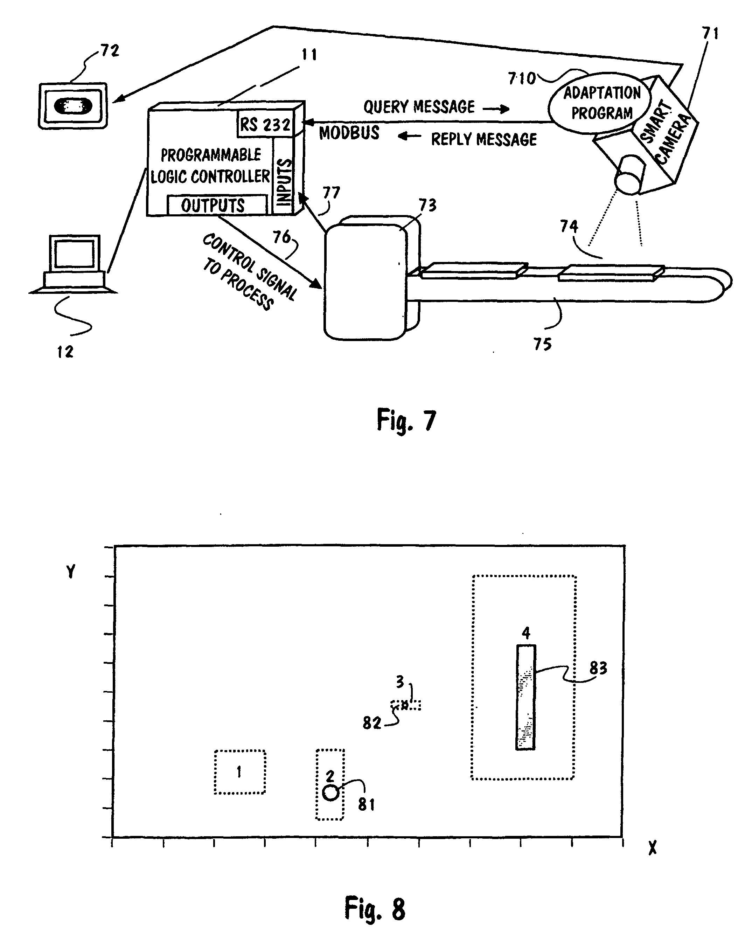

Fig. **7** shows a system based on the invention in an environment in which the quality of targets **74** coming from device **73** to conveyor **75** has to be controlled. Device **73** may be an assembly device, a cutter or the like, the function element of which, e.g. a press, positioning element or the like (not shown), is controlled by means of control signal **76** given by programmable logic **11**. To simplify, it is supposed that the device in question is a perforating machine that perforates metal sheets.

Initializing data **77** received from the function element is led to one of the input ports of the logic. The device feeds finished products continuously onto conveyor **75** that brings them forward. In the figure the products are roughly drawn as rectangular pieces. Camera **71** monitors the pieces. It has adaptation program 710 based on the invention and its task is to control that the perforation is made correctly. When a piece **74** is within the shooting area, the sensor e.g. a photocell (not presented in the figure) tells the camera to take a picture. The picture is stored in the memory of the camera. It can immediately be viewed on monitor **72** that is located in the same facilities as the process control. The monitor is connected with a long separate cable to the video interface of the camera.

Fig. **8** is an allusive illustration of the camera picture. The coordinates X and Y have the values from 0 to 100. Let us suppose that four rectangular areas **1, 2, 3**, and **4** have to be viewed more in detail. In response to a trigger signal from a sensor, programmable logic **11** passes, a query via the Modbus to the adaptation program 710 and tells the camera software to calculate the data given in the message. The query is about the average of the gray scale values in area **1**. This can be used for checking the camera settings. e.g. the gain. The code of this task is **1**. Referring to area **2** the dimension of hole **81** shall be determined. The code of this task is **2**. Concerning area **3** the exact location of the center shall be determined. The code of the task is **4**. About area **4** one would like to know between which X coordinates slot **83** is situated, i.e. whether the slot is correctly positioned. The code number of the task is **5**.

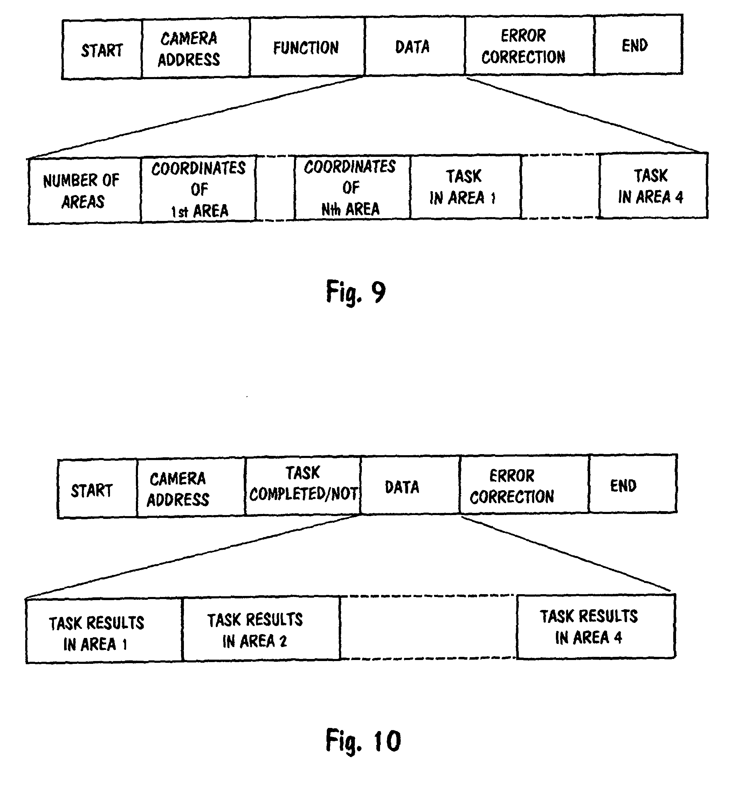

The structure of the query message has been presented in Fig. **9**. The upper portion of the figure shows the Modbus message described above. The lower portion presents its data field where the data needed by the camera for task completion is located. The task is to analyze a picture showing the object, and there are four areas in this picture that must be analyzed, as shown in Fig. **8**. Therefore the message informs the number of areas to be analyzed, what the areas are, and what exactly must be examined in each area. This information is in the data field in the following order: First there is the number of areas to be examined, i.e. four. Next the size of the areas to be examined is given, by using the X and Y coordinates in succession, first the coordinates of area 1 and finally those of area **4**. Hence, to define one rectangular area two X and two Y coordinates are needed, so the length of one area field is four bytes. Thirdly, task definitions for each area are enumerated in succession.

Table **1** shows, for the sake of clarity, one possible value sequence in the data field.

**Table 1**

| Value | Description | Position in fig.9 |
|---|---|---|
| 4 | Number of the areas to be analyzed | Number of the areas to be analyzed |
| 20 | X coordinate of 1^{st} area | Coordinates of the 1^{st} area |
| 30 | X coordinate of the 1^{st} area | |
| 15 | Y coordinate of the 1^{st} area | |
| 30 | Y coordinate of the 1^{st} area | |
| 40 | X coordinate of the 2^{nd} area | Coordinates of the 2^{nd} area |
| 45 | X coordinate of the 2^{nd} area | |
| 5 | Y coordinate of the 2^{nd} area | |
| 30 | Y coordinate of the 2^{nd} area | |
| 55 | X coordinate of the 3^{rd} area | Coordinates of the 3^{rd} area |
| 60 | X coordinate of the 3^{rd} area | |
| 45 | Y coordinate of the 3^{rd} area | |
| 46 | Y coordinate of the 3^{rd} area | |
| 70 | X coordinate of the 4^{th} area | Coordinates of the 4^{th} area |
| 90 | X coordinate of the 4^{th} area | |
| 20 | Y coordinate of the 4^{th} area | |
| 90 | Y coordinate of the 4^{th} area | |
| 1 | Average gray scale value in the 1^{st} area | Task relating to the 1^{st} area |
| 4 | Every 4^{th} pixel in calculation | |
| 2 | Surface area in the 2^{nd} area having gray scale value greater than the average | Task relating to the 2^{nd} area |
| 4 | Mass center point of the surface area in the 3^{rd} area having gray scale value greater than the average | Task relating to the 3^{rd} area |
| 5 | Boundaries of the dark sub-area in the 4^{th} area | Task relating to the 4^{th} area |
| 5 | Both x coordinates must be included in the reply message | |

In the first data position there is the value 4 that refers to the number of rectangular areas to be examined. In the four next data positions X coordinates (20, 30) and the Y coordinates (15, 30) of the first area to be examined are given.

The value 1 in the data position for the task definition of the first area indicates that the average gray shade value must be calculated. The value 4 of the next data position informs that only every fourth pixel is calculated. It is worth noting that the average gray scale value that has been calculated picture by picture (product by product) is moving. Its advantage is that external conditions, such as a change in the lighting or dirt, do not affect the result, as when areas lighter or darker than the average shade of gray are calculated they are compared to the average shade of gray of the same picture.

The task to be carried out in area 2 is to calculate the area having the level of gray greater the average level of gray. This gives the dimensions of hole **81**, fig. **8**. The value 2 of the data position indicates this task.

The task to be carried out in area 3 is to calculate the mass center of the area having the level of gray greater the average level of gray, i.e. the center of hole **82**, fig. **8**. The task can be indicated by using one data position and placing the value 4 in it.

The two last data position values, 5 and 5, indicate the task to be carried out in area 4. The first 5 means that that the boundaries of the dark area, i.e. the boundaries of slot **83** in fig. **8**, have to be determined, and the other 5 means that both X coordinates of these boundaries must be given in the reply message.

The structure of the above described data field and the meaning of the values of the data positions of the message are unambiguously known to the smart camera, which means that it operates correctly and is able to carry out the right tasks using the right values.

After sending the task-giving message the programmable logic asks at regular intervals whether the task has been completed. When the smart camera has carried out the task, it creates a reply and sends it to the programmable logic. The camera's reply comprises as many data positions as requested in the queries.

Fig. **10** shows the contents of the reply. The task results of the areas are given in succession using as many data positions as needed. The reply contains answers to every question of the query in an unchanged order. In this way it is guaranteed that the programmable logic is able to recognize the answers.

The first result comprises one data position indicating the average shade of gray in area **1**. The second result gives the area of the hole darker than the average shade of gray in area **2**. This needs only one data position. Next comes the task result of area **3**. This needs two data positions as the result is the **X** and **Y** coordinate of the center. Finally we have the task result of area **4** giving the boundaries of the dark slot in area **4**, and more precisely, only the **X** coordinates. Two data positions are needed.

After the programmable logic has processed the reply, it can send a new query based on the given information. The contents of the query is naturally programmed in advance in the logic, and the program provides the message with the needed data values.

The system according to the invention can also be applied in a way that the same picture includes both the picture of the target to be examined and a reference picture. We could take as an example a continuous oven. When bread that has come out of the oven is moving to the conveyor, there is a rack beside the conveyor supporting ideally baked bread. The camera shows an area where both the ideally baked bread and bread coming from the oven are to be seen. The values of each bread on the conveyor are compared to those of the ideal bread. The aim is then to keep the breads equally dark by regulating the temperature of the oven. Because the reference bread is exposed to the same conditions as the breads to be quality-controlled, the external conditions like dirt, changes in the lighting efficiency etc. do not influence the results.

The monitor always shows the last picture, and the areas to be examined have been framed. For the user it is easy to change the place of the areas to be examined if needed, and then feed the coordinates of the areas to the programmable logic. There is no need to modify the camera software.

### ANOTHER EMBODIMENT OF THE INVENTION

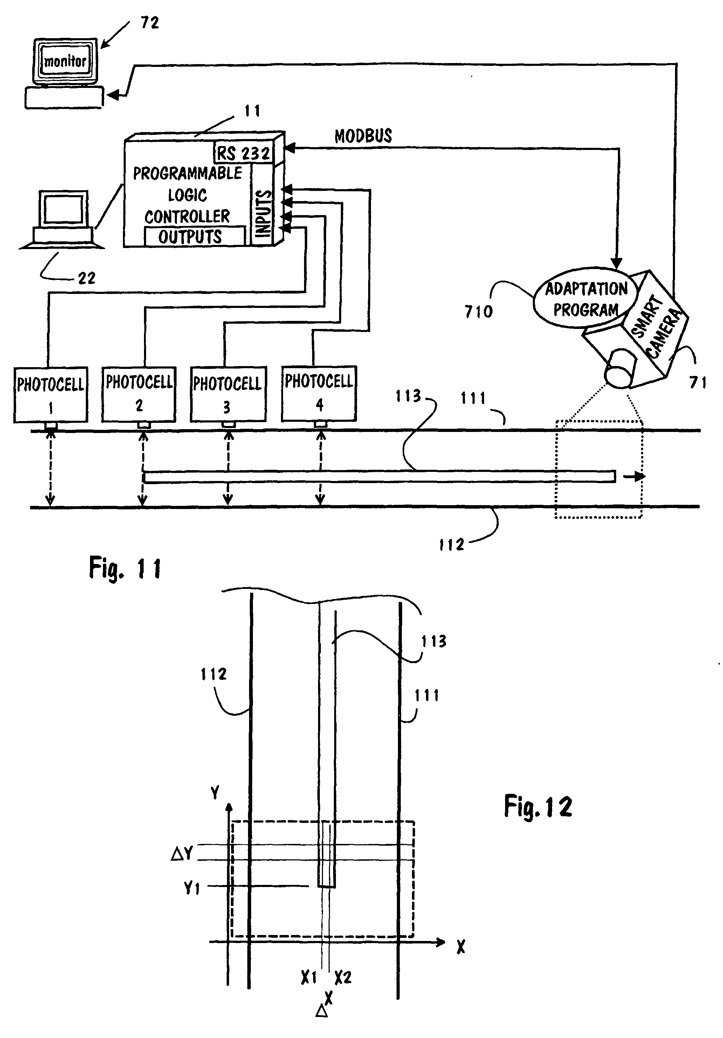

Fig. **11** shows another example embodiment of the invention. It is used to measure the length of rod-shaped objects. The object is e.g. a metal rod coming from a cutter. It has a certain tolerance. The reference numerals are, where applicable, the same as in fig. **7**.

Rods **113** are cut in a continuous process. The rod cut-into-size is taken to a trough conveyor limited by its edges **111** and **112**. On the edge of the trough there are photocells **1** to **4** at a certain distance from each other. They are connected to the input of the programmable logic. At a certain distance and in the direction of the motion there is smart camera **71** having adaptation program **710** based on the invention. A servomotor (not shown) can move the camera longitudinally along the trough. First, the photocell is chosen whose signal at the rear part of the rod will trigger a function according to the invention. In the figure it is cell **2**. Then the servomotor moves the camera to a point along the trough so that the front part of the rod cut-into-size lies within the vision field of the camera. An absolute location sensor tells the exact location of the camera, longitudinally along the trough, to the logic. After that the following process may begin.

When the rear part of rod **113** is right at photocell number **2** camera **71** takes a picture of the front part of the rod. This picture corresponds approximately to the area limited by the dashed line in fig. **12**.

Now the programmable logic sends a task via the bus to the adaptation program of the smart camera. The first task is to examine, within an area **ΔY** in the cross direction to the trough, the X coordinates of the area having gray level higher than the average gray level of the area within ΔY. It is presupposed that the rod is darker in color than the trough. So the longitudinal position of the rod in the trough at the moment when the picture was taken can be discovered. The coordinates are sent to the programmable logic that sends the next task to the camera. The rectangular area Δ**X** has to be examined in the direction of the coordinate Y. The coordinate of rod end **Y1** can be calculated on the basis of the gray level values of the area. The exact location of the rear end of the rod in the Y-direction is known, so that the logic program calculates the length of the rod from the above-mentioned values. If the deviation exceeds the tolerance, the rod is rejected.

If the length of the rods to be cut is changed, the process operator can easily modify the logic program and place the camera to a new position along the trough. There is no need to modify the camera software.

The above mentioned two applications serve as examples in describing the features of the invention. Naturally there are a huge number of different applications.

The Modbus protocol has been used here as an example of data transfer systems and as a process control unit the programmable logic was utilized. Of course, any other field bus protocol can be used. Instead of a bus any other data transfer link with its protocol may be applied, e.g. connections like the Internet, ethemet, a radio communication, an ATM protocol etc. The adaptation program that is linked to the camera need only be made in such a way that it understands the protocol used and is able to work with it. This all is within the knowledge of a man skilled in the art. The point of this invention is the fact that once the adaptation program has been installed to the camera, the camera doesn't need any further programming. All necessary programming is made in the programmable logic by the process maintainer. Unlike in the conventional machine vision solutions there is no need for a camera programmer. The programming device may however be any programmable device, e.g. a PC.

An artisan of the art naturally understands that the programmable logic can be replaced also by a factory system, of the suppliers of which the Finnish process control system Damatic, the manufacturer Valmet Ltd, and Alcont, the manufacturer Honeywell, can be mentioned. In addition, it has to be pointed out that in the previous examples only gray scale vales were processed. It is clear that when a color camera is used, data calculated from different color values may be requested in the tasks. Then the reply gives information about three colors. Other such modifications will also be apparent to those skilled in the art.

## Claims

1. A process control system comprising:
at least one process control unit including a program for controlling operation of a process,
a video camera (71),
image-processing software for processing a picture taken by the video camera (71),
a data-transfer link for conveying messages,
**characterized in that**
the process control unit is adapted to form a query message comprising a code of a desired image-processing task and parameter values needed for performing the image-processing task,
the system further comprises an adaptation program (710) coupled to the image-processing software and the data-transfer link,
the adaptation program (710) is further
adapted to extract the code and the parameter values from the query message received from the process control unit via the data-transfer link, and to transform the code and the parameter values to a form suitable for the image-processing software so that the image-processing software is able to carry out the desired image-processing task;
adapted to receive the results of the image processing task from the image-processing software and send the results in a reply message via the data transfer link to the process control unit.

2. The system as in claim 1, **characterized in that** one query message includes several codes of the image-processing tasks with their parameter values.

3. The system as in claim 1, **characterized in that** the adaptation program (710) contains several codes of the image-processing tasks, wherein in response to the codes and the attached parameter values the image-processing program is able to carry out the corresponding number of image-processing tasks.

4. The system as in claim 1, **characterized in that** the image-processing software and the video camera (71) are integrated to form a smart camera (71), and the adaptation program (710) has been installed in this camera (71).

5. The system as in claim 1, **characterized in that** the image-processing software and the adaptation program (710) are installed in a computer connected to the camera (71).

6. The system as in claim 1, **characterized in that** when the process control program needs information about a picture, a query message is formed into which the code identifying the task and the related parametric values are placed.

7. The system as in claim 1, **characterized in that** by changing information to be received from a picture, desired modifications are made only in the program for controlling operation of the process.

8. The system as in claim 1, **characterized in that** any commands concerning image-processing may be included in the program for controlling operation of the process, provided that the adaptation program (710) includes the codes identifying the tasks.

9. The system as in claim 1, **characterized in that** the process control unit is a programmable logic controller (11).

10. The system as in claim 1, **characterized in that** the data transfer link is a field bus.

11. The system as in claim 1,**characterized in that** the adaptation program (710) contains a number of codes of image-processing tasks, whereby the codes are related to the image-processing software so that each code with its potential parameter values corresponds to at least one image-processing task performed by the image-processing software.

12. A method for controlling image processing of a video camera (71) in a process control system having
at least one control unit with a process control program,
a data transfer link,
a video camera (71) with image-processing software for analyzing a picture taken by the camera (71),
**characterized by** the steps of:
assigning an individual code to at least one desired image-processing task,
determining parameters related to the code,
sending a query message, containing the code of the image-processing task and the parameter values, from the control unit to an adaptation program (710) via the data transfer link, said adaptation program (710) being arranged between the image-processing software and the data transfer link,
transforming in the adaptation program (710) the codes and the parameters to a form understood by the image-processing software,
instructing the image-processing software to run the at least one task defined by the code and the parametric values, said instructing facilitated by the adaptation program (710);
causing the adaptation program (710) to place the results of the image processing task into a reply message, and
sending the reply message via the data transfer link from the adaptation program (710) to the control unit.

13. The method as in claim 12, wherein modifications made only in the process control program modify the tasks to be performed by the image-processing program.

14. The method as in claim 12, **characterized in that** the picture taken by the video camera (71) is displayed on a monitor and modifications needed for the process control program are made on the basis of the monitor picture.

## Patentansprüche

1. Prozesssteuerungssystem, umfassend:
wenigstens eine Prozesssteuereinheit, die ein Programm für eine Steuerung des Ablaufs eines Prozesses enthält;
eine Videokamera (71),
Bildverarbeitungssoftware für eine Verarbeitung eines von der Videokamera (71) aufgenommenen Bildes;
einen Datenübermittlungsabschnitt für eine Beförderung von Nachrichten,
**dadurch gekennzeichnet, dass**
die Prozesssteuereinheit so beschaffen ist, dass sie eine Abfragenachricht bildet, die einen Code für eine gewünschte Bildverarbeitungsaufgabe und Parameterwerte, die für die Ausführung der Bildverarbeitungsaufgabe erforderlich sind, umfasst,
das System ferner ein Anpassungsprogramm (710) umfasst, das mit der Bildverarbeitungssoftware und dem Datenübermittlungsabschnitt gekoppelt ist,
wobei das Anpassungsprogramm (710) ferner
so beschaffen ist, dass es den Code und die Parameterwerte aus der von der Prozesssteuereinheit über den Datenübermittlungsabschnitt empfangenen Abfragenachricht gewinnt und den Code und die Parameterwerte in eine Form überführt, die für die Bildverarbeitungssoftware geeignet ist, so dass die Bildverarbeitungssoftware im Stande ist, die gewünschte Bildverarbeitungsaufgabe auszuführen; und
so beschaffen ist, dass es die Ergebnisse der Bildverarbeitungsaufgabe von der Bildverarbeitungssoftware entgegennimmt und die Ergebnisse in einer Rückantwortnachricht über den Datenübermittlungsabschnitt an die Prozesssteuereinheit sendet.

2. System nach Anspruch 1, **dadurch gekennzeichnet, dass** eine Abfragenachricht mehrere Codes für Bildverarbeitungsaufgaben mit ihren Parameterwerten enthält.

3. System nach Anspruch 1, **dadurch gekennzeichnet, dass** das Anpassungsprogramm (710) mehrere Codes für die Bildverarbeitungsaufgaben enthält, wobei das Bildverarbeitungsprogramm in Reaktion auf die Codes und die angehängten Parameterwerte im Stande ist, die entsprechende Anzahl Bildverarbeitungsaufgaben auszuführen.

4. System nach Anspruch 1, **dadurch gekennzeichnet,dass** die Bildverarbeitungssoftware und die Videokamera (71) integriert sind, um eine intelligente Kamera (71) zu bilden, wobei das Anpassungsprogramm (710) in dieser Kamera (71) installiert ist.

5. System nach Anspruch 1, **dadurch gekennzeichnet, dass** die Bildverarbeitungssoftware und das Anpassungsprogramm (710) auf einem mit der Kamera (71) verbundenen Computer installiert sind.

6. System nach Anspruch 1, **dadurch gekennzeichnet, dass** dann, wenn das Prozessüberwachungsprogramm Informationen über ein Bild benötigt, eine Abfragenachricht gebildet wird, in der die Aufgabe identifizierender Code und die damit in Beziehung stehenden Parameterwerte angeordnet werden.

7. System nach Anspruch 1, **dadurch gekennzeichnet, dass** bei einer Änderung der Informationen, die aus einem Bild erhalten werden sollen, die gewünschten Modifikationen nur in dem Programm für die Steuerung des Ablaufs des Prozesses vorgenommen werden.

8. System nach Anspruch 1, **dadurch gekennzeichnet, dass** alle Befehle, die die Bildverarbeitung betreffen, in dem Programm für die Steuerung des Ablaufs des Prozesses enthalten sein können, vorausgesetzt, das Anpassungsprogramm (710) enthält die Codes, die die Aufgaben identifizieren.

9. System nach Anspruch 1, **dadurch gekennzeichnet, dass** die Prozesssteuereinheit eine speicherprogrammierbare Steuerung (11) ist.

10. System nach Anspruch 1, **dadurch gekennzeichnet , dass** der Datenübermittlungsabschnitt ein Feldbus ist.

11. System nach Anspruch 1, **dadurch gekennzeichnet, dass** das Anpassungsprogramm (710) eine Anzahl von Codes für Bildverarbeitungsaufgaben enthält, wodurch die Codes derart mit der Bildverarbeitungssoftware in Beziehung stehen, dass jeder Code mit seinen möglichen Parameterwerten wenigstens einer Bildverarbeitungsaufgabe entspricht, die von der Bildverarbeitungssoftware ausgeführt wird.

12. Verfahren für die Bildverarbeitungssteuerung einer Videokamera (71) in einem Prozesssteuerungssystem mit
wenigstens einer Steuereinheit mit einem Prozesssteuerungsprogramm,
einem Datenübermittlungsabschnitt,
einer Videokamera (71) mit einer Bildverarbeitungssoftware für eine Analyse eines von der Kamera (71) aufgenommenen Bildes,
**gekennzeichnet durch** folgende Schritte:
- wenigstens einer gewünschten Bildverarbeitungsaufgabe einen individuellen Code zuweisen,
- mit dem Code in Beziehung stehende Parameter bestimmen,
- eine Abfragenachricht, die den Code für die Bildverarbeitungsaufgabe und die Parameterwerte enthält, von der Steuereinheit über den Datenübermittlungsabschnitt an ein Anpassungsprogramm (710) senden, wobei das Anpassungsprogramm (710) zwischen der Bildverarbeitungssoftware und dem Datenübermittlungsabschnitt angeordnet ist,
- in dem Anpassungsprogramm (710) die Codes und die Parameter in eine Form überführen, die von der Bildverarbeitungssoftware verstanden wird,
- die Bildverarbeitungssoftware anweisen, wenigstens eine Aufgabe, die **durch** den Code und die Parameterwerte definiert ist, abzuarbeiten, wobei dieses Anweisen **durch** das Anpassungsprogramm (710) vereinfacht wird;
- das Anpassungsprogramm (710) veranlassen, die Ergebnisse der Bildverarbeitungsaufgabe in einer Rückantwortnachricht anzuordnen; und
- die Rückantwortnachricht von dem Anpassungsprogramm (710) über den Datenübermittlungsabschnitt zu der Steuereinheit senden.

13. Verfahren nach Anspruch 12, wobei Modifikationen, die nur in dem Prozesssteuerungsprogramm vorgenommen werden, die von dem Bildverarbeitungsprogramm auszuführenden Aufgaben modifizieren.

14. Verfahren nach Anspruch 12, **dadurch gekennzeichnet, dass** das von der Videokamera (71) aufgenommene Bild an einem Monitor angezeigt wird und an dem Prozesssteuerungsprogramm erforderliche Modifikationen anhand des Monitorbildes vorgenommen werden.

## Revendications

1. Système de commande de processus comprenant :
au moins une unité de commande de processus incluant un programme de commande du fonctionnement d'un processus,
une caméra vidéo (71),
un logiciel de traitement d'images servant à traiter une image prise par la caméra vidéo (71),
un lien de transfert de données pour convoyer des messages,
**caractérisé en ce que**
l'unité de commande de processus est adaptée pour former un message de requête comprenant un code d'une tâche de traitement d'image désirée et des valeurs de paramètres nécessaires pour accomplir la tâche de traitement d'image,
le système comprend en outre un programme d'adaptation (710) couplé au logiciel de traitement d'images et au lien de transfert de données,
le programme d'adaptation (710) est de plus
adapté pour extraire le code et les valeurs de paramètres du message de requête reçu de l'unité de commande de processus via le lien de transfert de données et pour transformer le code et les valeurs de paramètres en une forme appropriée pour le logiciel de traitement d'images de manière à ce que le logiciel de traitement d'images soit capable d'accomplir la tâche de traitement d'image désirée ;
adapté pour recevoir les résultats de la tâche de traitement d'image du logiciel de traitement d'images et envoyer les résultats dans un message de réponse via le lien de transfert de données à l'unité de commande de processus.

2. Système selon la revendication 1, **caractérisé en ce que** un message de requête inclut plusieurs codes des tâches de traitement d'image avec leurs valeurs de paramètres.

3. Système selon la revendication 1, **caractérisé en ce que** le programme d'adaptation (710) contient plusieurs codes des tâches de traitement d'image, tandis qu'en réponse aux codes et aux valeurs de paramètres rattachées, le programme de traitement d'images est capable d'accomplir le nombre correspondant de tâches de traitement d'image.

4. Système selon la revendication 1, **caractérisé en ce que** le logiciel de traitement d'images et la caméra vidéo (71) sont intégrés afin de former une caméra intelligente (71) et que le programme d'adaptation (710) a été installé dans cette caméra (71).

5. Système selon la revendication 1, **caractérisé en ce que** le logiciel de traitement d'images et le programme d'adaptation (710) sont installés dans un ordinateur connecté à la caméra (71).

6. Système selon la revendication 1, **caractérisé en ce que**, lorsque le programme de commande de processus a besoin d'informations sur une image, il est formé un message de requête dans lequel sont mis le code identifiant la tâche et les valeurs paramétriques corrélatives.

7. Système selon la revendication 1, **caractérisé en ce qu'**en changeant les informations à recevoir d'une image, les modifications désirées sont faites uniquement dans le programme de commande de fonctionnement du processus.

8. Système selon la revendication 1, **caractérisé en ce que** toutes les commandes concernant le traitement d'images peuvent être inclues dans le programme de commande de fonctionnement du processus, pourvu que le programme d'adaptation (710) inclue les codes identifiant les tâches.

9. Système selon la revendication 1, **caractérisé en ce que** l'unité de commande de processus est un contrôleur logique programmable (11).

10. Système selon la revendication 1, **caractérisé en ce que** le lien de transfert de données est un bus de champ.

11. Système selon la revendication 1, **caractérisé en ce que** le programme d'adaptation (710) contient un certain nombre de codes de tâches de traitement d'images, les codes étant en rapport avec le logiciel de traitement d'images de manière à ce que chaque code avec ses valeurs de paramètres potentielles corresponde à au moins une tâche de traitement d'image accomplie par le logiciel de traitement d'images.

12. Procédé de commande du traitement d'images d'une caméra vidéo (71) dans un système de commande de processus ayant
au moins une unité de commande avec un programme de commande de processus,
un lien de transfert de données,
une caméra vidéo (71) avec un logiciel de traitement d'images pour analyser une image prise par la caméra (71),
**caractérisé par** les étapes suivantes :
attribution d'un code individuel à au moins une tâche de traitement d'image,
détermination de paramètres relatifs au code,
envoi d'un message de requête contenant le code de la tâche de traitement d'image et des valeurs de paramètres depuis l'unité de commande vers un programme d'adaptation (710) via le lien de transfert de données, ledit programme d'adaptation (710) étant aménagé entre le logiciel de traitement d'images et le lien de transfert de données,
transformation, dans le programme d'adaptation (710), des codes et des paramètres en une forme comprise par le logiciel de traitement d'images,
communication au logiciel de traitement d'images de l'instruction de réalisation de l'au moins une tâche définie par le code et les valeurs paramétriques, ladite communication d'instruction étant facilitée par le programme d'adaptation (710) ;
faire en sorte que le programme d'adaptation (710) place les résultats de la tâche de traitement d'image dans un message de réponse, et
envoi du message de réponse via le lien de transfert de données depuis le programme d'adaptation (710) vers l'unité de commande.

13. Système selon la revendication 12, dans lequel les modifications faites seulement par le programme de commande de processus modifient les tâches à accomplir par le programme de traitement d'images.

14. Système selon la revendication 12, **caractérisé en ce que** l'image prise par la caméra vidéo (71) est affichée sur un moniteur et que les modifications nécessaires au programme de commande de processus sont faites sur la base de l'image du moniteur.
